# EUROPEAN PATENT SPECIFICATION

(11) **EP 1 976 310 B1**
(45) Date of publication and mention of the grant of the patent: **09.11.2016**
(21) Application number: 07006594.1
(22) Date of filing: 29.03.2007
(51) Int. Cl.: H04W 4/02

(54) **METHOD FOR PROVIDING INFORMATION TO A MOBILE TERMINAL AND CENTRAL MANAGEMENT UNIT**
Verfahren zur Bereitstellung von Information in einem mobilen Endgerät und zentrale Verwaltungseinheit
Procédé pour la fourniture d'informations à un terminal mobile et unité de gestion centrale

(43) Date of publication of application: 01.10.2008
(73) Proprietor: Vodafone GmbH, 40549 Düsseldorf (DE)
(72) Inventor: Martin, Maurice, 3620 Ianaken (BE)
(74) Representative: Cullinane, Marietta Bettina

(56) References cited:
- EP-A- 1 605 674
- WO-A-02/37323
- GB-A- 2 369 966

## Description

The present invention relates to a method for providing information to a mobile terminal of a mobile communication network. The invention further relates to a central management unit for providing the information.

Mobile terminals, such as mobile phones, have developed to become more than a mere device for communicating with other users. In particular mobile terminals have proven to be suitable devices for obtaining information.

In KR 10 2001 0103916 A for example, a system for measuring air pollution using a portable phone is described. The portable phone is provided with a sensor for measuring the concentration of gas and with a signal processing part to emit information on the gas concentration to the user. The disadvantage of this usage of the mobile terminal is the necessity to equip the mobile terminal with sensing devices in order to obtain the desired information at the mobile device. Alternatively, services are known, wherein users of mobile terminals can obtain information on conditions of the surrounding area, e.g. via a WAP page. With these known services, the location of the user has to be indicated by the user himself, in order to obtain the desired information.

In WO 02/37323 A1 a method for matching object profiles using telecommunication network is described. In this method a user may define a personal profile which may then be matched against a profile of an object, wherein the latter will also be created by a user. One disadvantacte of this method is that both profiles have to be created manually.

The problem underlying the present invention is thus to provide a solution where information, in particular environmental information, can easily and reliably be made available at a mobile terminal of a communications network.

According to a first aspect, the problem is solved by a method for providing information to a mobile terminal of a communication network, wherein a central management unit is connected to a database containing environmental information, wherein the central management unit receives an indication on the present location of the mobile terminal, retrieves information relating to the indicated location from the database and transmits a message relating to the retrieved information to the mobile terminal wherein the indication of the present location of the mobile terminal is received at the central management unit from a network unit and that the information retrieved from the database is compared to entries of a personal profile at the central management unit. The method is characterized in that the environmental information is sensor data or measuring results and the message relating to the retrieved information is transmitted to the mobile terminal when the retrieved information exceeds a threshold value and when the retrieved information drops below the threshold value of the personal profile.

By receiving an indication of the present location of the mobile terminal at the central management unit, environmental information, in particular information on environmental conditions, for this specific location can be retrieved from a database. Since the information on the present location of a mobile terminal and thus the user of the mobile terminal is received from a network entity additional information, in particular an indication of the mobile terminal or user, such as the MSISDN number, may be transmitted together with the indication of the present location of the user. The indication of the mobile terminal or user, allows the central processing unit to access a user profile, stored for the identified user. Hence, user specific information relating to the information retrieved from the database for the specific location may be transmitted to the user.

The indication of the present location of the mobile terminal may be received at the central processing unit from the mobile terminal itself. In this case the user may initiate the transmission of the indication of the present location for example by sending an SMS message or any other signal capable of transmitting location information to the central processing unit. Alternatively, the indication of the present location of the mobile terminal may be received at the central processing unit from a radio access network node, in particular a base station of a cellular mobile communication network. The transmission to the central processing unit from the radio access network node will be conducted via other network entities such as an MSC. The radio access network node of the cell, where the mobile terminal is present, may transmit the cell-ID of the respective cell to the central processing unit. The cell-ID may be sent constantly to the central processing unit. Alternatively, the cell-ID will only be transmitted to the central processing unit if the user moves to a different cell, i.e. if the cell-ID changes. In a further alternative, the cell-ID may be requested from the central processing unit, once a processing of information for a specific user is to be initiated. In this case, the MSISDN or another identification of the mobile terminal of the user will be stored in the personal profile of the user. The cell-ID may be translated at the central processing unit into geographical data, in order to allow environmental information for the specific location to be retrieved from a database, where the information is stored in a way that it is sorted by geographic locations.

The message relating to the retrieved information is preferably transmitted to the mobile terminal depending on the comparison result with entries of the personal profile, in particular a threshold value. A threshold value may be provided by the user. This threshold value may be a value for a parameter, e.g. ozone level, which affects the health of this specific user. Alternatively, the user may decide to set a threshold value according to his interest. This embodiment is beneficial, if the user wants to receive messages on specific parameters without the parameter necessarily affecting his health. By setting such a threshold value and by the comparison of retrieved information to such threshold values before transmission of a respective message, the frequency of transmission of messages can be adjusted according to the user's preference and can be kept to a minimum. The user will, hence, not be disturbed by messages, which are of no interest or importance to him. This embodiment of the inventive method is advantageous in that different users with different needs or different interests can be supplied with information according to their needs or interests. As furthermore the information or values retrieved from the database are specific for the present location of the user, messages will only be sent to the user if the conditions at his current location fulfil the requirements set in the personal profile, e.g. exceed a threshold value.

In the personal profile it may further or alternatively be prescribed, that a message will be sent to the user when the retrieved value from the database drops below the threshold value.

In addition, the personal profile of a user may comprise a policy for transmitting messages to the mobile device. For example, a user may request that messages are only to be sent at a certain time of the day, e.g. in the evening. If no such policy is stored in the user profile, the message will be sent, once the comparison of the retrieved information with the threshold value of the personal profile shows the exceeding of the threshold value.

In the personal profile also a range of tolerance may be given. The range may be set so that if the value retrieved from the database approaches the threshold value but the next retrieved value falls outside of the range, no message will be sent. This approach is advantageous, as a message will be avoided for single peak values, that may be due to measuring tolerances or deficiencies of the sensing devices measuring the environmental conditions.

According to one embodiment, the message relating to the retrieved information may be a warning relating to present conditions. Such a warning will be generated if information currently measured approaches or exceed the threshold value.

The message may be transmitted to the mobile terminal via a push mechanism, in particular via WAP push.

The environmental information which is stored in the database is preferably information on the environmental conditions, e.g. air quality, in particular air pollution and pollen level. The parameters of the air may affect individuals, in particular people with allergies or weak overall health conditions. Information on the ozone level may also be of importance to people, who have no health problems but who want to exercise.

The environmental information is obtained by sensors or other appropriate measuring devices. The sensor data or measuring results are transmitted to the database and automatically entered into the database with an indication of the location of measurement. Preferably, the database is updated in real-time. This means, once new sensor data or new measuring results become available, the database will be updated accordingly., By providing such a real-time update, the database entries can reliably be used to determine whether a specific user at a specific location is to be warned or not. Especially, the ozone level in the air changes rapidly and an up-to-date information is desirable.

According to a further aspect, the present invention relates to a central management unit for managing transmission of information to a mobile terminal of a communication network, wherein the central management unit comprises at least one personal profile of a user of the network, at least one connection to a database containing environmental information, namely sensor data or measuring results, at least one comparison unit for comparing information retrieved from the database to entries of the user profile and at least one communication interface for communicating with the mobile terminal for transmitting a message to the mobile terminal, when the information retrieved from the database exceeds a threshold value of the personal profile and when the information retrieved from the database drops below the threshold value of the personal profile.

The database may be included in the central processing unit. Alternatively, the database may be a separate entity. The latter case is advantageous in that for specific regions, i.e. areas, the environmental information may be stored locally and the central processing unit only accesses the database where information relating to the current location of the user is stored.

The database is preferably connected to at least one sensor or measuring device. The connection may be physical. Alternatively, the sensor data or measuring results may be transmitted to the database via wireless communication channels or may be manually input into the database.

The central management unit comprises at least one communication interface for communicating with at least one entity of the communication network, in particular a radio network access node and/or a mobile terminal. This communication interface allows the central processing unit to receive location related information of the user from the respective entity. In addition, messages, such as warnings, can be transmitted to the mobile terminal via this communication interface.

Units and entities of the central management unit may be realized as hardware and/or software components. The units and entities may at least partially be combined.

The central management unit is equipped for carrying out the inventive method. Features and advantages described with reference to the inventive method also relate to the inventive central management unit and vice versa, where applicable.

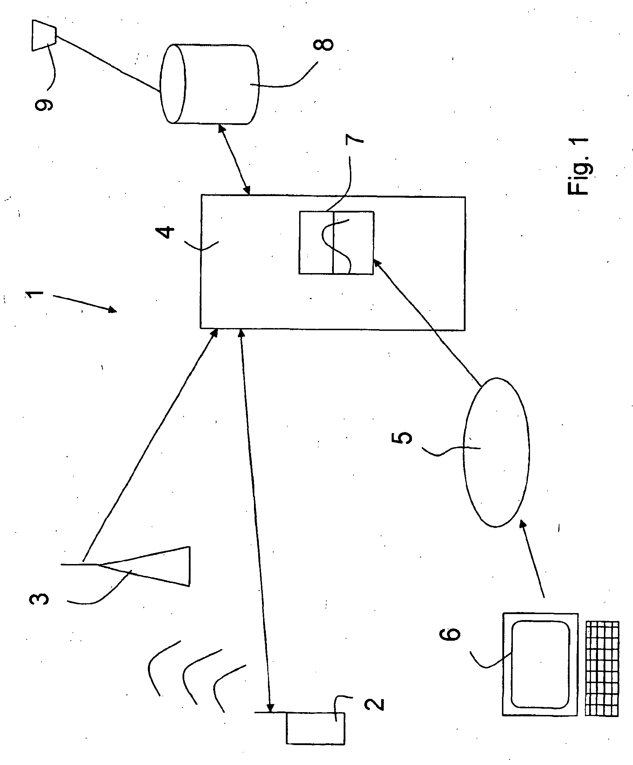

The present invention will now be described again in detail with reference to the enclosed Figure 1 which shows a schematic view of a system to be used for the inventive method.

The system 1 in Figure 1 comprises a mobile terminal 2 which is depicted as a mobile phone. The mobile terminal 2 is an end device of a mobile communication network, which is indicated in Figure 1 by a base station 3. Via the mobile communication network and in particular via the base station 3 the mobile phone 2 can communicate with a central processing unit 4.

In the central processing unit 4 user profiles 7 of users of mobile phones 2 are stored. For sake of clarity only one personal profile 7 is shown. The central processing unit 4 and in particular the personal profiles 7 may be accesses via the Internet 5. This allows a user to establish a user profile 7, enter, modify and/or delete settings in his user profile 7 via an entry device such as a keyboard of a computer 6.

The system 1 further comprises a database 8, which is shown in Figure 1 to be a separate unit, but may also be included in the central processing unit 4. The database 8 contains entries of parameters and values of these parameters of environmental conditions, such as air pollution, e.g. ozone, fine particles, sulphur dioxide, nitrogen oxides. These entries are sorted by or linked to geographical locations. Thereby, values of a specific parameter for a specific location can be retrieved from the database 8. The information relating to the environmental conditions, in particular the values of the parameters are obtained by sensors 9. In Figure 1 only one sensor 9 is shown. It is, however, obvious that several sensors 9, in particular different sensors for different parameters may be used.

The personal profile 7 in the central processing unit 4 contains at least one threshold value of each, parameter for which values are available at the database 8.

The system can be used in various ways. For example, for asthma patients, the inventive method that can be carried out with the system 1 shown in Figure 1 is very useful. Air pollution, such as smog can aggravate existing childhood asthma and can also cause it, especially in association with ozone exposure. Also for allergy patients, the method may be very useful.

Environmental conditions can be measured or detected. For example, sensors may be positioned at a specific location, e.g. along a street, to determine the level of ozone, fine particles, sulphur dioxide, nitrogen oxides or to detect and determine pollens and their concentration. Alternatively, the conditions may be detected by global monitoring, e.g. by space-based sensors. In particular output of a scanning imaging absorption spectrometer for atmospheric cartography (SCIAMACHY) instruments can be used to determine the conditions.

A user of a mobile phone 2 may sign up for an information service on environmental conditions. The user may sign up by accessing the central processing unit 4 via the Internet 5 or by sending a message, e.g. SMS, via his mobile phone 2. Once the user is registered, a personal profile 7 can be created.

The personal profile 7 may be created from a computer or from the mobile phone 2. In either case preferably options are given to the user. The user interface for creating the profile 7 may display the parameters for which values or information can be obtained from the central processing unit 4. The options may include ozone level, pollen level and so on. In addition, the user may give a threshold value for the respective parameter. The threshold will determine when a message will be sent to the user. Also a range around the threshold value may be determined by the user, so that messages will only be sent to the user, if a given amount of values derived from the database are within the range. Furthermore, the personal profile 7 may comprise an indication of when the comparison of the threshold value with values retrieved from the database 8 should be carried out. This indication may also be input or selected by the user or may be preset within the central processing unit 4, e.g. once per day. Finally, the user may select the kind of transmission, e.g. WAP push, and/or the transmission time which should be used for transmitting messages to the user. In an alternative embodiment all settings of the personal profile 7, except for the parameter which is to be monitored, and the threshold value for the parameter, may be preset.

With the thus created personal profile, the user will be able to use the service.

Sensor data will be transmitted from the sensor 9 to the database 8. Upon receipt of new sensor data, the database 8 will be updated.

The location of the mobile phone 2 may constantly be communicated to the central processing unit 4 via, for example, the current cell-ID from a respective base station 3. Alternatively, the current location may be indicated to the central processing unit 4 by the user, e.g. via SMS.

Upon receipt of the indication of the current location of the user, the central processing unit 4 will access the personal profile 7 stored for this user. According to the settings in the personal profile 7 the central processing unit 4 initiates a comparison of values The central processing unit 4 will use the threshold value and/or range set in the personal profile 7 and will access the database 8 to obtain the up-to-date value of the respective parameter, e.g. the pollen concentration, for the present location of the user. If the value retrieved from the database 8 exceeds the threshold value, the central processing unit 4 will generate a message to be delivered to the mobile phone 2 of the user. The message may for example be a warning that the pollen level is currently higher than the maximum level which the user can normally handle, without medication. If the warning relates to the ozone level, the user will be able to interrupt or refrain from an exercise until the level dropped below his personal threshold value. As the database 8 is continuously updated, the user may also be informed, once the retrieved value dropped below the threshold.

## Claims

1. Method for providing information to a mobile terminal (2) of a communication network, wherein a central management unit (4) is connected to a database (8) containing environmental information, wherein the central management unit (4) receives an indication on the present location of the mobile terminal (1), retrieves information relating to the indicated location from the database (8) and transmits a message relating to the retrieved information to the mobile terminal (2), wherein the indication of the present location of the mobile terminal (1) is received at the central management unit (4) from a network unit (3) and the information retrieved from the database (8) is compared to entries of a personal profile (7) at the central management unit (4) **characterized in that** the environmental information is sensor data or measuring results and the message relating to the retrieved information is transmitted to the mobile terminal (2) when the retrieved information exceeds a threshold value and when the retrieved information drops below the threshold value of the personal profile (7).

2. Method according to claim 1, **characterized in that** the indication of the present. location of the mobile terminal (2) is received from a radio access network node (3).

3. Method according to anyone of claim 1 or 2, **characterized in that** the message relating to the retrieved information is a warning-rotating to present conditions or a forecast on upcoming conditions.

4. Method according to anyone of claims 1 to 3, **characterized in that** the message is transmitted to the mobile terminal (2) via a push mechanism, in particular via WAP push.

5. Method according to anyone of claims 1 to 4, **characterized in that** the information stored in the database (8) is information on air quality, in particular air pollution and pollen level.

6. Method according to claim 5, **characterized in that** the information in the database is updated in real-time.

7. Central management unit for managing transmission of information to a mobile terminal (2) of a communication network, wherein the central management unit (4) comprises at least one personal profile (7) of a user of the network, at least one connection to a database (8) containing environmental information, namely sensor data or measuring results, at least one comparison unit for comparing information retrieved from the database (8) to entries of the user profile (7) and at least one communication interface for communicating with the mobile terminal (2) for transmitting a message to the mobile terminal (2), when the information retrieved from the database (8) exceeds a threshold value of the personal profile (7) and when the information retrieved from the database (8) drops below the threshold value of the personal profile (7).

8. Central management unit according to claim 7, **characterized in that** the the communication interface also serves for communicating with a radio network access node (3).

9. Central management unit according to claim 7 or 8, **characterized in that** the central management unit (4) is equipped for carrying out the method according to anyone of claims 1 to 6.

## Patentansprüche

1. Verfahren für die Bereitstellung von Informationen an ein mobiles Endgerät (2) eines Kommunikationsnetzwerks, wobei eine zentrale Verwaltungseinheit (4) mit einer Datenbank (8) verbunden ist, die Umgebungsinformationen enthält, wobei die zentrale Verwaltungseinheit (4) eine Angabe der gegenwärtigen Position des mobilen Endgerätes (1) empfängt, Informationen, die sich auf die angegebene Position beziehen, aus der Datenbank (8) abruft und eine Nachricht, die sich auf die abgerufenen Informationen bezieht, an das mobile Endgerät (2) übermittelt, wobei die Angabe der aktuellen Position des mobilen Endgerätes (1) an der zentralen Verwaltungseinheit (4) von einer Netzwerkeinheit (3) empfangen wird und die von der Datenbank (8) abgerufenen Informationen mit Einträgen eines persönlichen Profils (7) an der zentralen Verwaltungseinheit (4) verglichen werden, **dadurch gekennzeichnet, dass** die Umgebungsinformationen Sensordaten oder Messergebnisse sind und die Nachricht, die sich auf die abgerufenen Informationen bezieht, an das mobile Endgerät (2) übertragen wird, wenn die abgerufenen Informationen einen Schwellenwert überschreiten und wenn die abgerufenen Informationen unter den Schwellenwert des persönlichen Profils (7) fallen.

2. Verfahren nach Anspruch 1, **dadurch gekennzeichnet, dass** die Angabe der gegenwärtigen Position des mobilen Endgeräts (2) von einem Funkzugangsnetzwerkknoten (3) empfangen wird.

3. Verfahren nach einem der Ansprüche 1 oder 2, **dadurch gekennzeichnet, dass** die Nachricht, die die abgerufenen Informationen betrifft, eine Warnung ist, die sich auf gegenwärtige Bedingungen oder eine Prognose für kommende Bedingungen bezieht.

4. Verfahren nach einem der Ansprüche 1 bis 3, **dadurch gekennzeichnet, dass** die Nachricht an das mobile Endgerät (2) über einen Push-Mechanismus, insbesondere über WAP-Push, übertragen wird.

5. Verfahren nach einem der Ansprüche 1 bis 4, **dadurch gekennzeichnet, dass** die Informationen, die in der Datenbank (8) gespeichert sind, Informationen über die Luftqualität, insbesondere der Luftverschmutzung und Pollen-Level, sind.

6. Verfahren nach Anspruch 5, **dadurch gekennzeichnet, dass** die Informationen in der Datenbank in Echtzeit aktualisiert werden.

7. Zentrale Verwaltungseinheit zur Verwaltung der Übertragung von Informationen an ein mobiles Endgerät (2) eines Kommunikationsnetzwerks, wobei die zentrale Verwaltungseinheit (4) umfasst mindestens ein persönliches Profil (7) eines Benutzers des Netzes, wenigstens eine Verbindung zu einer Datenbank (8), die Umgebungsinformationen, nämlich Sensordaten oder Messergebnisse, zumindest eine Vergleichseinheit zum Vergleich von Informationen, die von der Datenbank (8) abgerufen wurden mit Einträgen des Nutzerprofils (7) und zumindest eine Kommunikationsschnittstelle zur Kommunikation mit dem mobilen Endgerät (2) zur Übermittlung einer Nachricht an das mobile Endgerät (2), wenn die von der Datenbank (8) abgerufenen Informationen einen Schwellenwert des persönlichen Profils (7) überschreitet und wenn die von der Datenbank (8) abgerufenen Informationen unter den Schwellenwert des persönlichen Profils (7) fallen.

8. Zentrale Verwaltungseinheit nach Anspruch 7, **dadurch gekennzeichnet, dass** die Kommunikationsschnittstelle auch zur Kommunikation mit einem Funknetzwerkzugangsknoten (3) dient.

9. Zentrale Verwaltungseinheit nach Anspruch 7 oder 8, **dadurch gekennzeichnet, dass** die zentrale Verwaltungseinheit (4) zur Durchführung des Verfahrens nach einem der Ansprüche 1 bis 6 ausgestattet ist.

## Revendications

1. Procédé de fourniture d'informations à un terminal mobile (2) d'un réseau de communication, dans lequel une unité de gestion centrale (4) est couplée à une base de données (8) contenant des informations environnementales, dans lequel l'unité de gestion centrale (4) reçoit une indication sur la position présente du terminal mobile (1), extrait les informations se rapportant à la position indiquée à partir de la base de données (8) et transmet au terminal mobile (2) un message se rapportant aux informations extraites, dans lequel l'indication de la position présente du terminal mobile (1) est reçue au niveau de l'unité de gestion centrale (4) à partir d'une unité de réseau (3) et les informations extraites de la base de données (8) sont comparées aux entrées d'un profil personnel (7) au niveau de l'unité de gestion centrale (4) **caractérisé en ce que** les informations environnementales sont des données de capteur ou des résultats de mesure, et le message se rapportant aux informations extraites est transmis au terminal mobile (2) lorsque les informations extraites dépassent une valeur de seuil et lorsque les informations extraites chutent au-dessous d'une valeur de seuil du profil personnel (7).

2. Procédé selon la revendication 1, **caractérisé en ce que** l'indication de la position présente du terminal mobile (2) est reçue d'un noeud de réseau à accès par radio (3).

3. Procédé selon l'une quelconque des revendications 1 ou 2, **caractérisé en ce que** le message se rapportant aux informations extraites est une alerte se rapportant à des conditions présentes ou à une prévision sur des conditions imminentes.

4. Procédé selon l'une quelconque des revendications 1 à 3, **caractérisé en ce que** le message est transmis au terminal mobile (2) par l'intermédiaire d'un mécanisme de poussée de pile, en particulier par l'intermédiaire d'une poussée WAP.

5. Procédé selon l'une quelconque des revendications 1 à 4, **caractérisé en ce que** les informations stockées dans la base de données (8) sont des informations sur la qualité de l'air, en particulier, le niveau de pollution atmosphérique et de pollens.

6. Procédé selon la revendication 5, **caractérisé en ce que** les informations dans la base de données sont actualisées en temps réel.

7. Unité de gestion centrale destinée à gérer la transmission d'informations vers un terminal mobile (2) d'un réseau de communication, dans laquelle l'unité de gestion centrale (4) comprend au moins un profil personnel (7) d'un utilisateur du réseau, au moins une liaison à une base de données (8) contenant des informations environnementales, à savoir des données de capteur ou des résultats de mesure, au moins une unité de comparaison destinée à comparer des informations extraites de la base de données (8) à des entrées du profil d'utilisateur (7) et au moins une interface de communication destinée à assurer la communication avec le terminal mobile (2) afin de transmettre un message au terminal mobile (2), lorsque les informations extraites de la base de données (8) dépassent une valeur de seuil du profil personnel (7) et lorsque les informations extraites de la base de données (8) chutent au-dessous de la valeur de seuil du profil personnel (7).

8. Unité de gestion centrale selon la revendication 7, **caractérisée en ce que** l'interface de communication sert aussi à communiquer avec un noeud d'accès réseau par radio (3).

9. Unité de gestion centrale selon la revendication 7 ou 8, **caractérisée en ce que** l'unité de gestion centrale (4) est équipée pour mettre en oeuvre le procédé selon l'une quelconque des revendications 1 à 6.
